(19) Europäisches Patentamt
European Patent Office
Office européen des brevets

(11) **EP 1 981 339 B1**

(12) **EUROPEAN PATENT SPECIFICATION**

(45) Date of publication and mention
of the grant of the patent:
**29.02.2012 Bulletin 2012/09**

(21) Application number: **07848641.2**

(22) Date of filing: **20.12.2007**

(51) Int Cl.:
*A01N 43/12* (2006.01)       *A01P 13/02* (2006.01)
*A01N 47/36* (2006.01)       *A01N 47/30* (2006.01)
*A01N 47/22* (2006.01)       *A01N 43/76* (2006.01)
*A01N 43/90* (2006.01)       *A01N 43/82* (2006.01)
*A01N 43/40* (2006.01)       *A01N 43/08* (2006.01)
*A01N 37/40* (2006.01)       *A01N 33/18* (2006.01)

(86) International application number:
**PCT/GB2007/004912**

(87) International publication number:
**WO 2008/075065 (26.06.2008 Gazette 2008/26)**

(54) **HERBICIDE COMPOSITION**

**HERBIZIDZUSAMMENSETZUNG**

**COMPOSITION D'HERBICIDE**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.12.2006 GB 0625589**

(43) Date of publication of application:
**22.10.2008 Bulletin 2008/43**

(73) Proprietor: **Agrovista UK LTD.
Stapleford
Nottingham
Nottinghamshire NG9 8AB (GB)**

(72) Inventors:
• **LOCKETT, John
Stapleford Nottinghamshire NG9 8AB (GB)**
• **MORGAN, Craig
Stapleford Nottinghamshire NG9 8AB (GB)**

(74) Representative: **Elsy, David et al
Withers & Rogers LLP
4 More London Riverside
London SE1 2AU (GB)**

(56) References cited:
**EP-A- 0 113 169        WO-A-01/35742
WO-A-03/026426**

• **LEE W O: "CONTROL OF VOLUNTEER WHEAT
TRITICUM-AESTIVUM IN FALL PLANTED
PERENNIAL RYE GRASS LOLIUM-PERENNE
WITH ETHOFUMESATE" WEED SCIENCE, WEED
SCIENCE SOCIETY OF AMERICA, CHAMPAIGN,
IL, US, vol. 28, no. 3, 1980, pages 292-294,
XP009096965 ISSN: 0043-1745**

Remarks:
The file contains technical information submitted after
the application was filed and not included in this
specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a new approach to the protection of wheat crops from unwanted weeds, and to new compositions for this purpose utilising ethofumesate.

The control of unwanted weeds in wheat crops has been an problem in agriculture for decades. Many different herbicides have been used over the years to control and kill such weeds. However, problems have more recently been experienced with the use of many of these herbicides, as the weeds have developed a significant resistance against them over time. Problems include a present day standard pendimethalin and enhanced metabolism resistance. In some locations the conventional herbicides are therefore no longer sufficiently effective. In addition, other herbicides which were still effective are no longer allowed to be used in the concentrations required due to environmental considerations.

There is therefore a need for a herbicide which can be both effective at controlling or inhibiting the growth of unwanted weeds in wheat crops, and which is not damaging to the environment.

Ethofumesate (2-ethoxy-3,3-dimethyl-5-methylsulfonyloxy-2H-benzofuran) has been known as a herbicide since the 1970s. It was used for the control of cereal and other vegetation in sugar beet, but not for the control of weeds in wheat and other cereal crops. Weeds treated include knotgrass, redshank, black bindweed, cleavers, chickweed and annual meadow grass. The ethofumesate was conventionally used in large amounts, up to about 2000 grams of the active ingredient per hectare of grassland.

EP 113169 A (FBC Limited) discloses herbicidal formulations optionally containing ethofumesate. Ethofumesate is shown to be used as a foliar spray as a herbicide to control a wide range of weeds (including, in this case, wheat) in crops such as grassland and beet crops.

However, contrary to previous technical thinking in the field, it has now surprisingly been found that ethofumesate can in fact be effective as a herbicide for the protection of wheat crops while controlling or inhibiting the growth of unwanted weeds, and for killing the weeds. It was found that ethofumesate was useful in, for example, post emergence winter wheat programmes, and for most present day varieties except Soissons.

Furthermore, in contrast to many of the existing herbicides which are used against grass weeds, ethofumesate is not known to have had any resistance shown against it by weeds.

Therefore, in accordance with the present invention, there is provided a use of, and/or a method of using, a composition comprising ethofumesate as a herbicide in the protection of wheat crops, with the proviso that the wheat crop is preferably not Soissons.

The use and method allows wheat to be grown whilst controlling or inhibiting the growth of surrounding weeds.

The composition is preferably applied to the crop via a hydraulic sprayer, post crop emergence, and acts primarily via root uptake.

Wheat, *genus Triticum,* exists as a number of types. Durum wheat (*T. durum*) and emmer wheat are tetraploid wheats. Hexaploid wheats include spelt wheat, compact wheat and bread wheat.

Preferably, the wheat is bread, or common, wheat, *T. aestivum.*

Preferably, the wheat is a winter wheat. Winter wheat is a wheat that is usually planted in autumn (such as September to December for the northern hemisphere), and typically harvested around August the following year. Most commercially available varieties of winter wheat may be treated with the compositions of the invention. Other wheat, such as autumn drilled spring wheat which has hardened off, may also be treated.

Soissons is preferably not used as the variety has been shown to have susceptibility to being killed by ethofumesate. Soissons is a variety bred by Maison Florimund Desprez (France) and has Jena x HN35 parentage. It is available from www.Elsoms.com.

The timing of the application of the ethofumesate is an important factor in the protection of the wheat crops. While ethofumesate may be herbicidally effective against wheat plants at very early stages of growth, once the wheat plant reaches a certain stage of growth, the ethofumesate is no longer significantly herbicidally effective against it. A composition comprising ethofumesate is applied to the wheat at pre-emergence or not before ZCK 13. While there is no definitive latest cut-off point for applying the ethofumesate, it is often not applied after ZCK 25 as the weed can be too large for the ethofumesate to be sufficiently effective. In some seasons, the cut-off point can be later still, up to ZCK 30 or 31 if the weeds are small or if the ethofumesate is being used as a soil residual.

ZCK refers to the Zadoks scale, which quantifies the development and growth of cereal grains. The scale is based on ten principal plant development stages, which are divided into secondary stages. A new leaf is counted as fully emerged when 50 percent of the leaf blade has unfolded. Two or more codes may be used to describe a plant using the Zadoks scale. For example, wheat that has six leaves unfolded (16), three tillers (23) and one node on the main stem (31) would be staged as 16,23,31. A full tabulated explanation of the various stages is given below.

| Zadok Scale | Description |
|---|---|
| | **Germination** |

(continued)

| Zadok Scale | Description |
|---|---|
| 00 | Dry seed |
| 01 | Start of imbibition |
| 03 | Imbibition complete |
| 05 | Radicle emerged from seed |
| 07 | Coleoptile emerged from seed |
| 09 | Leaf just at coleoptile tip |
| | **Seedling growth** |
| 10 | First leaf through coleoptile |
| 11 | First leaf unfolded |
| 12 | 2 leaves unfolded |
| 13 | 3 leaves unfolded |
| 14 | 4 leaves unfolded |
| 15 | 5 leaves unfolded |
| 16 | 6 leaves unfolded |
| 17 | 7 leaves unfolded |
| 18 | 8 leaves unfolded |
| 19 | 9 or more leaves unfolded |
| | **Tillering** |
| 20 | Main shoot only |
| 21 | Main shoot and 1 tiller |
| 22 | Main shoot and 2 tillers |
| 23 | Main shoot and 3 tillers |
| 24 | Main shoot and 4 tillers |
| 25 | Main shoot and 5 tillers |
| 26 | Main shoot and 6 tillers |
| 27 | Main shoot and 7 tillers |
| 28 | Main shoot and 8 tillers |
| 29 | Main shoot and 9 or more tillers |
| | **Stem Elongation** |
| 30 | Pseudo stem erection |
| 31 | 1 st node detectable |
| 32 | 2nd node detectable |
| 33 | 3rd node detectable |
| 34 | 4th node detectable |
| 35 | 5th node detectable |
| 36 | 6th node detectable |
| 37 | Flag leaf just visible |
| 39 | Flag leaf ligule/collar just visible |

(continued)

| Zadok Scale | Description |
|---|---|
| | **Booting** |
| 40 | - |
| 41 | Flag leaf sheath extending |
| 45 | Boots just swollen |
| 47 | Flag leaf sheath opening |
| 49 | First awns visible |
| | **Inflorescence emergence** |
| 50 | First spikelet of inflorescence visible |
| 53 | 1/4 of inflorescence emerged |
| 55 | 1/2 of inflorescence emerged |
| 57 | 3/4 of inflorescence emerged |
| 59 | Emergence of inflorescence completed |
| | **Anthesis** |
| 60 | Beginning on anthesis |
| 65 | Anthesis half-way |
| 69 | Anthesis completed |
| | **Milk development** |
| 70 | - |
| 71 | Kernel watery ripe |
| 73 | Early milk |
| 75 | Medium milk |
| 77 | Late milk |
| | **Dough development** |
| 80 | - |
| 83 | Early dough |
| 85 | Soft dough |
| 87 | Hard dough |
| | **Ripening** |
| 90 | - |
| 91 | Kernel hard (difficult to divide with thumbnail) |
| 92 | Kernel hard (no longer dented with thumbnail) |
| 93 | Kernel loosening in daytime |
| 94 | Overripe, straw dead and collapsing |
| 95 | Seed dormant |
| 96 | Viable seed giving 50% germination |
| 97 | Seed not dormant |
| 98 | Secondary dormancy induced |
| 99 | Secondary dormancy lost |

This table and its explanation of the various stages can be found at e.g. http://weeds.montana.edu/crop/Growth_stages_book/p22_23.htm.

The composition is applied pre emergence or post emergence to the wheat after ZCK 13 at the earliest, most preferably between ZCK 13-21, especially if the crop is healthy. In the event that the crop is not considered to be healthy at ZCK 13, the composition can be applied at a later stage when it is considered by the skilled person to be sufficiently healthy.

In contrast to ethofumesate compositions used previously in the control of wheat crops, according to the present invention, the composition may be applied to the wheat such that only an amount of ethofumesate of between 50 grams active/ha and 600 grams active/ha, preferably at least 62.5 grams active/ha, or at least 200 grams active/ha is applied. This is equivalent to about 1-4 litres of formulated product (200gramme formulated product) per hectare, as compared with the 10 litres of formulated product (2000 grams active per hectare) which was previously used. This represents a significant reduction in the quantity of ethofumesate required.

Preferably, the composition is applied to the wheat such that an amount of ethofumesate of about 600 grams active/ha is applied to the wheat crops in any formulation.

Ethofumesate may be used alone in the protection of wheat crops, or alternatively may be used in combination with one or more further herbicides. Examples of such further herbicides include phenmedipham, pendimethalin, trifluralin, iodosulfuron, mesosulfuron, isoproturon (IPU), chlorotoluron (CTU), flufenacet, diflufenican (DFF), flurtamone, picolinofen, tribenuron, fenoxaprop, clodinafop, bromoxynil, ioxynil, flupyrsulfuron-methyl, pinoxaden, pyroxsulam and mixtures and combinations thereof.

Other herbicides, such as IPU, CTU and trifluralin are facing opposition to their use due to concerns about their impact upon the environment. The use of ethofumesate of the invention would be a substitute for them.

Additionally, other herbicides, the effectiveness of which has diminished against the weeds, are effective in combination with the ethofumesate.

Optionally, some of the active ingredients may include substances as safeners, such as cloquintocet-methyl with clodinafop and mefenpyr-methyl with fenoxaprop, for example.

Preferably, the one or more further herbicides are selected from iodosulfuron, +/mesosulfuron, pendimethalin, +/-picolinofen, flufenacet, and +/-DFF.

When more than one further herbicides are combined with ethofumesate, these further herbicides can include mixtures of iodosulfuron with mesosulfuron (marketed by Bayer under the trade name Atlantis), flufenacet with DFF (marketed by Bayer under the trade names Firebird and Liberator), flurtamone with DFF, pendimethalin with picolinofen, clodinafop with trifluralin (marketed by Syngenta under the trade name Hawk), bromoxynil with ioxynil, clodinafop with DFF, clodinafop with pinoxaden, and fenoxaprop with IPU.

As well as ethofumesate itself, sources of ethofumesate which may be used in the invention comprise Leyclene (a mixture ethofumesate, bromoxynil and ioxynil; sold under that trade name by Bayer), or a mixture of phenmedipham and ethofumesate, the latter being useful in later growth stages.

Typical ethofumesate formulations used in the present invention include 200 g/l EC and 500 g/l SC (EC = Emulsifiable Concentrate, SC = Suspension Concentrate).

Optionally, the compositions used in the invention can also comprise one or more adjuvants. These can be any adjuvants which are authorised for use in herbicidal formulations, but are preferably selected from oil based adjuvants and mixtures, organosilicone based adjuvants and mixtures, non-ionic based adjuvants and mixtures, polymeric based adjuvants and mixtures, and fatty acid based adjuvants and mixtures, and combinations thereof.

Weeds are usually considered to be plants that grow among cultivated plants, such as wheat crops, and compete with the crop for space, nutrients, water, etc.

In its protection of the wheat crops, the ethofumesate-containing composition is used to control or inhibit the growth of weeds, and also preferably to kill the weeds. Preferred target weeds are grasses, such as blackgrass *(Alopecurus myosurides),* annual meadow grass *(Poa annua),* knotgrass, chickweed, cleavers, redshank and/or black bindweed.

Also provided in accordance with the present invention is a composition comprising ethofumesate and one or more further herbicides. Examples of further herbicides include pendimethalin, trifluralin (sold for example under the trademark "Treflan" by Dow Agrosciences or in combination with diflufenican as Ardent[tm] by Bayer Crop Sciences), iodosulfuron, mesosulfuron, isoproturon (IPU), chlorotoluron (CTU), flufenacet, diflufenican (DFF), flurtamone, picolinofen, tribenuron, fenoxaprop, +/clodinafop ( for example sold under the trademark Topik by Syngenta), flupyrsulfuron-methyl (for example sold under the trademark Lexus by DuPont), pinoxaden, and combinations thereof.

Preferably, the one or more further herbicides are selected from iodosulfuron, +/mesosulfuron, pendimethalin, +/-picolinofen, flufenacet, and +/-DFF.

When more than one further herbicides are combined with ethofumesate, these further herbicides can include mixtures of iodosulfuron with mesosulfuron (marketed by Bayer under the trade name Atlantis), flufenacet with DFF (marketed by Bayer under the trade names Firebird and Liberator), flurtamone with DFF, pendimethalin with picolinofen, clodinafop with trifluralin (marketed by Syngenta under the trade name Hawk), bromoxynil with ioxynil, clodinafop with DFF, clodinafop with pinoxaden, and fenoxaprop with IPU (marketed by Bayer under the trade name Puma). Pendimethalin is marketed under the trademark "Stomp" by BASF.

Optionally, the compositions comprising more than one further herbicides can also comprise one or more adjuvants. These can be any adjuvants which are authorised for use in herbicidal formulations, but they are preferably selected from oil based adjuvants and mixtures, organosilicone based adjuvants and mixtures, non-ionic based adjuvants and mixtures, polymeric based adjuvants and mixtures, and fatty acid based adjuvants and mixtures, and combinations thereof.

Preferably, the composition comprises between about 50 to about 500 g/l of ethofumesate, and between about 1 to about 1500 g/l of any further herbicide component. More preferably, the composition comprises between about 75 to about 250 g/l of ethofumesate, arid between about 75 to about 1250 g/l of any further herbicide component. Still more preferably, the composition comprises between about 90 to about 200 g/l of ethofumesate, and between about 90 to about 800 g/l of any further herbicide component.

Also in accordance with the present invention is provided a method of controlling or inhibiting the growth of weeds and of killing weeds associated with wheat crops comprising applying a herbicidally effective amount of ethofumesate alone or a composition containing ethofumesate and one or more further herbicides as described above.

Experimental data shows that ethofumesate is as least as or more efficient in controlling and killing blackgrass as any other residual partners currently used, and that it achieves high activity against annual meadow grass even at low concentrations.

**Examples**

**STANDARD OPERATING PROCEDURES**

[0039]

　1 This Standard Operating Procedures describe the equipment most commonly used for application of the test material, its calibration and general maintenance.

　2 REQUIREMENTS

　　2.1 Knapsack Sprayers
　　Where a knapsack sprayer is used to apply the treatment to the required crop, the propellant source (e.g.$CO_2$/ compressed air) is attached to a vessel containing the appropriate treatment. This pressurises the vessel so that when the valves are opened, the spray is forced out of the bottle and through the boom.
　　The gas bottle is attached to a regulator to control the amount of gas entering the vessel and the pressure is monitored by a gauge attached to the handle of the sprayer.
　　Each boom is individually numbered.

　　　2.1.1 Nozzles and Filters
　　　The number of nozzles present on the boom are either 4 (2m swath) or 6 (3m swath) at 50 cm spacing or 5 (2m swath) at 40cm spacing.
　　　Low Drift 110° flat fan tips are most commonly used. Occasionally other nozzle types may be used for specialised purposes.
　　　2.1.2 Calibration
　　　The output required from each nozzle per minute is calculated using a typical formula such as:

$$\text{Output (l/min)} = \frac{\text{spray vol (l/ha) x forward speed (km/h) x nozzle spacing (m)}}{600}$$

　　　for example if spray volume = 200 l/ha
　　　forward speed = 3.6 km/h (= 1m/sec)
　　　nozzle spacing = 0.5 m

$$\text{output required} = \frac{200 \times 3.6 \times 0.5}{600}$$

$$= 0.6 \ \text{l/min}$$

Once the required output is determined the boom can then be calibrated. This is done by measuring the output from each nozzle at a specified pressure over a given period of time. The pressure can then be adjusted to give the required output within a 5% tolerance. A check for satisfactory atomisation is also made at this point and any errant nozzles are replaced and the calibration procedure repeated.

If the correct output cannot be achieved within the manufacturers specified pressure range, smaller or larger nozzles will be fitted and the process repeated.

The calibration procedure is carried out at least before commencement of spray season i.e. Autumn and Spring and as soon as possible after any nozzles need to be replaced in the field.

2.1.3 Maintenance

When spraying is finished the canisters and the spray boom are thoroughly cleaned using water and All Clear® Extra. If a pesticide is sprayed that requires a specific cleaner then this cleaner will be used.

2.2 Granule application

Granule applications are normally made by the use of a Pepperpot.

2.3 Seed Treatment

Seed is normally provided pre-treated by an Officially Recognised Efficacy Testing Facility or Organisation.

Tables 1-8 below detail the data obtained from applying compositions comprising ethofumesate onto crops to control the growth of blackgrass over a number of years, 2003-2006.

*Materials and Method*

All trials carried out were of a small plot with a randomised block design. Generally plot size was around 20m$^2$ replicated 3-4 times.

The trials were conducted in commercial fields with a known blackgrass problem. Each plot was marked with canes and measures were undertaken to ensure no overspray from the grower.

All applications were made using a hand held boom. The chemical was applied in an application volume of 200 l/ha.

Assessments of crop selectivity were carried out using the accepted crop visual score and weed control carried out by either quadrant counts or a visual assessment of overall control per plot.

**Results - Harvest year 2003: Ethofumesate crop selectivity and activity when used as final residual partner**

Table 1

Crop Safety Assessments

| Application Date | Crop Size | Damage |
|---|---|---|
| 25-Nov | ZCK 12 | Equivalent to standards (some effects from pre emergence) |

Crop effects equivalent to standards observed.
% Weed Control

Table 2

| ZCK 12 | 3 Weeks after ZCK 12 | % Control |
|---|---|---|
| Untreated | Untreated | 25% g/c |
| **Standards** | | |
| Lexus 20g + Topik 0.125 + Galion 0.5 | Protugan Plus 4.0 | 100 |
| Lexus 20g + Topik 0.125 + | Ethofumesate 200gai | 100 |

(continued)

| ZCK 12 | 3 Weeks after ZCK 12 | % Control |
|---|---|---|
| Galion 0.5 | | |
| Lexus 20g + Topik 0.125 + Galion 0.5 | Ethofumesate 400gai | 98.3 |
| Lexus 20g + Topik 0.125 + Galion 0.5 | Ethofumesate 800gai | 100 |
| Lexus 20g + Topik 0.125 + Galion 0.5 | Ethofumesate 400gai + Simazine 240gai | 99.3 |
| Lexus 20g + Topik 0.125 + Galion 0.5 | Ethofumesate 400gai + Simazine 240gai + Grounded 0.2 | 99 |
| Lexus 20g + Topik 0.125 + Galion 0.5 | Ethofumesate 400gai + Simazine 240gai + Kinetic 0.05% | 100 |

(The figures 0.5 and 0.125 etc means 0.5 and 0.125 l/ha of the formulated product applied)
All treatments except untreated for a pre-emergence application of Trooper + Treflan.
Galion is an adjuvant (oxyalkylene glycol)

**Conclusions - 2003**

Protugan Plus was a mixture of isoproturon and simazine and has been removed from the market due to environmental issues with simazine. The data clearly shows that ethofumesate alone is as effective as this product when used in programmes, with no loss in weed control or effect on crop safety. It is therefore an ideal environmentally friendly replacement for the now unavailable Protugan Plus.

**Results - Harvest Year 2004: To confirm crop selectivity by means of harvested yield and activity as the Atlantis/ Lexus Partner and final residual**

Table 3

| Pre emergence | October | November | % Blackgrass Control | Yield T/ha |
|---|---|---|---|---|
| Untreated | Untreated | Untreated | 333 hds/m2 | 1.1 |
| | Atlantis 0.4kg + Stomp 3.3 + BioPower 1.0 | | 23.33 | 6 |
| | Atlantis 0.4kg + Ethofumesate 400 gai + BioPower 1.0 | | 23.33 | 6.2 |
| Trooper 4.0 + Treflan 2.0 | Lexus 20g + Stomp 3.3 + Galion 0.5 | | 16.67 | 5.9 |
| Trooper 4.0 + Treflan 2.0 | Lexus 20g + Stomp 3.3 + Galion 0.5 | Ethofumesate 200 gai | 40 | 6.9 |
| Trooper 4.0 + Treflan 2.0 | Lexus 20g + Stomp 3.3 + Galion 0.5 | Ethofumesate 400 gai | 70 | 7.1 |
| Trooper 4.0 + Treflan 2.0 | Lexus 20g + Stomp 3.3 + Galion 0.5 | Ethofumesate 800 gai | 91.67 | 8.6 |
| Trooper 4.0 + Treflan 2.0 | Lexus 20g + Ethofumesate 400 gai | | 26.67 | 6.4 |
| Trooper 4.0 + Treflan 2.0 | Atlantis 0.4kg + Stomp 3.3 + BioPower 1.0 | | 75 | 8.4 |
| Trooper 4.0 + Treflan 2.0 | Atlantis 0.4kg + Ethofumesate 400 gai + BioPower 1.0 | | 78.33 | 8.6 |

BioPower is an alkylethersulphate sodium salt adjuvant (Bayer Crop Science Ltd)

**Conclusions - 2004**

1) It can clearly be seen from Table 3 that the presence of ethofumesate has a positive effect upon the percentage of blackgrass control. Treatment with Lexus 20g + Stomp 3.3 + Galion 0.5 in October with no ethofumesate treatment in November gave a poor degree of control, only 16.67%. However, in comparison, the introduction of ethofumesate in November greatly increases the degree of control, with an approximately 250% increase for 200 gai up to a 550% increase for 800 gai.

2) Also, when ethofumesate replaces Stomp® (a pendimethalin-containing herbicide) in the October treatment, the degree of control of blackgrass again increases.

3) Ethofumesate could replace IPU or Stomp in programmes or as a tank mix partner. There are no issues in crop safety with regard to the standard and this is reflected in the yield of crop per hectare achieved. In non pre-emergence programmes, ethofumesate is as crop safe as Stomp (giving equivalent yields). Clearly, without the ethofumesate programme, the level of weed control was unacceptable. While Stomp has been an effective herbicide, there are serious concerns that the weeds have developed a resistance to it, particularly when it is used post-emergence.

**Harvest Year 2005: To demonstrate ethofumesate activity as an Atlantis partner or when used alone as a final residual herbicide.**

Table 4

| Application Date | Crop Size | Damage |
|---|---|---|
| 26-Oct | ZCK 13 | No |
| 03-Mar | ZCK 22-23 | No |

Table 5

| Mid October (+ BYDV all plots) | Spring | Blackgrass % Control 16/06/2005 |
|---|---|---|
| Untreated | Untreated | |
| Standard | | |
| Atlantis 0.4 + Stomp 2.5 + BioPower 1.0 | | 83 |
| Atlantis 0.4 + Ethofumesate 400 gai + BioPower 1.0 | | 80 |
| Atlantis 0.4 + Ethofumesate 600 gai + BioPower 1.0 | | 83 |
| Atlantis 0.4 + Ethofumesate 800 gai + BioPower 1.0 | | 83 |
| Atlantis 0.4 + Liberator 0.6 + BioPower 1.0 | | 83 |
| | Standards | |
| Atlantis 0.4 + Alpha Trifluralin 2.0 + BioPower 1.0 | Stomp 2.5 | 80 |
| Atlantis 0.4 + Alpha Trifluralin 2.0 + BioPower 1.0 | IPU 1500 gai | 77 |
| Atlantis 0.4 + Alpha Trifluralin 2.0 + BioPower 1.0 | Ethofumesate 400 gai | 77 |
| Atlantis 0.4 + Alpha Trifluralin 2.0 + BioPower 1.0 | Ethofumesate 600 gai | 80 |
| Atlantis 0.4 + Alpha Trifluralin 2.0 + BioPower 1.0 | Ethofumesate 800 gai | 78 |

**Conclusions - 2005**

When used as a tank mix partner with October Atlantis, ethofumesate gave equivalent levels of control as the standards (Stomp and Liberator). When used as a final residual in the spring, following autumn Atlantis applications it was again comparable to the standards. No crop effects were observed at any timing.

**Results Harvest Year 2006**

**Experiment 1: To establish crop safety and selectivity of ethofumesate when used a partner with Firebird**

Table 6

| Application Date | Crop Size | Damage |
|---|---|---|
| 31-Oct | ZCK 13-21 | No |
| 17-Nov | ZCK 21-23 | No |
| 03-Mar | ZCK 25 | No |

Table 7

| November Crop (3 leaf Plus) | Blackgrass % Control 21/02/2006 Prior to Atlantis |
|---|---|
| Untreated | 58 plants/m2 |
| Liberator 0.3 + Treflan 2.0 | 69 |
| Firebird 0.3 + Treflan 2.0 | 66.7 |
| Firebird 0.3 + Ardent 1.0 + Treflan 1.0 | 59.8 |
| Firebird 0.3 + Ardent 1.5 + Treflan 0.75 | 49.4 |
| Firebird 0.3 + SIP 31529 0.2 | 55.2 |
| **Firebird 0.3 + Ethofumesate 600g** | 86.3 |
| **Present Standards** | |
| Trooper 2.0 + Treflan 2.0 | 78.2 |
| Stomp 3.3 | 52.9 |
| All follow the same pre-emergence application (except untreated) | |

**Conclusions - Experiment 1 2006**

Ethofumesate mixes again show good crop selectivity. When mixed with Firebird instead of Treflan and Ardent, the ethofumesate gave a degree of weed control which is significantly superior to the herbicides which are presently use as partners for Firebird. Additionally, when mixed with Firebird, the ethofumesate gave a weed control which is significantly superior to the present day standards.

**Experiment 2: 2006**

Table 8

| Autumn Post-em (ZCK 11-12 Blackgrass) including BYDV | T2 + 10 days | Spring Treatment | Blackgrass % Control |
|---|---|---|---|
| Untreated | Untreated | Untreated | 586 heads/m2 |
| Atlantis 0.4 + Firebird 0.3 + Biopower 1.0 | | Treflan 2.0 | 100 |
| Lexus 20g + Stomp 3.3 | IPU 1500g + Treflan 2.0 | | 68.9 |
| Atlantis 0.4 + Firebird 0.3 + Biopower 1.0 | | **Ethofumesate 600gms** | 99.9 |
| IPU 1500g + Treflan 2.0 | | Atlantis 0.4 + Biopower 1.0 | 88.1 |
| Firebird 0.3 + Treflan 2.0 | | Atlantis 0.4 + Biopower 1.0 | 87 |

**Conclusions - Experiment 2 2006**

Again Ethofumesate shows good crop selectivity as the final residual herbicide, and gives weed control which is comparable to the Atlantis + Firebird followed by Treflan programme, and which is also significantly better than the other existing programmes. Treflan, however, is in danger of being removed from the market.
Ethofumesate provides a novel opportunity to introduce a new active into blackgrass and annual meadow grass programmes. It can replace present day actives, which are either showing some degree of resistance or are under review from environmental issues.

**Chickweed Treatment**

The attached table shows that ethofumesate may be used to successfully control chickweed at concentrations as low as 62 grams active ingredient/ha.

Table 9

| Trt No | chickweed 2-4 leaf | Chickweed 4-6 leaf | % damage at 7 days | | % damage at 14 days | | % damage at 21 days | | Fresh wt (g) at 21 days | |
|---|---|---|---|---|---|---|---|---|---|---|
| | | | | | | | | | | |
| 1 | Untreated | | 0 | c | 0 | f | 0 | d | 13 | a |
| | | Untreated | 0 | c | 0 | f | 0 | d | 12 | b |
| 2 | Ethofumesate SC 62.5 grams ai/ha | | 58 | a | 87 | a | 94 | ab | 1 | efg |
| 3 | Ethofumesate SC 125 grams ai/ha | | 55 | a | 89 | a | 96 | a | 1 | fg |
| 4 | Ethofumesate SC 250 grams ai/ha | | 55 | a | 90 | a | 95 | ab | 1 | fg |
| 5 | Ethofumesate SC 300 grams ai/ha | | 53 | a | 90 | a | 95 | ab | 1 | fg |
| 6 | Ethofumesate SC 400 grams ai/ha | | 58 | a | 90 | a | 96 | a | 0 | g |
| 7 | Ethofumesate SC 500 grams ai/ha | | 54 | a | 90 | a | 96 | a | 0 | fg |
| 8 | | Ethofumesate SC 62.5 grams ai/ha | 15 | b | 71 | e | 91 | c | 4 | c |
| 9 | | Ethofumesate SC 125 grams ai/ha | 20 | b | 75 | de | 92 | c | 3 | d |
| 10 | | Ethofwnesate SC 250 grams ai/ha | 16 | b | 76 | cd | 92 | c | 2 | de |
| 11 | | Ethofumesate SC 300 grams ai/ha | 19 | b | 81 | b | 94 | ab | 1 | ef |

(continued)

| Trt No | chickweed 2-4 leaf | Chickweed 4-6 leaf | % damage at 7 days | | % damage at 14 days | | % damage at 21 days | | Fresh wt (g) at 21 days | |
|---|---|---|---|---|---|---|---|---|---|---|
| 12 | | Ethofumesate SC 400 grams ai/ha | 20 | b | 80 | bc | 94 | b | 1 | efg |
| 13 | | Ethofumesate SC 500 grams ai/ha | 15 | b | 80 | bc | 94 | ab | 1 | efg |
| *Trt No: Treatment Number | | | | | | | | | | |
| 2007 Experiment: Pre emergence use of ethofumesate in wheat (not claimed) | | | | | | | | | | |

To establish the crop safety and weed control from pre-emergence of ethofumesate mixtures in Winter Wheat

Trial and Crop Details

| |
|---|
| Crop: Winter Wheat |
| Variety: Cordiale |
| Drilling Date: 28/9/07 |
| Soil Type: Sandy Clay Loam |
| Previous Treatment: : None |
| Previous Crop: Winter Wheat |

Application Date: Oct 1 2007

Results

See table below for overall weed control.

| | T1 Pre Emergence | Overall |
|---|---|---|
| | | % Control |
| | | |
| 1 | Untreated | 0 |
| 2 | Trooper 2.0 | 54 |
| 3 | Firebird 0.15 + Ethostat 0.6 | 56 |
| 4 | Firebird 0.15 + Ethostat 1.0 | 53 |
| 5 | Ethostat 0.6 + Diflanil 0.12 | 60 |
| | | |
| | Weeds Present | |
| | *VERHE* | Speedwell |
| | *BRNSW* | Vol. OSR |
| | *STEME* | Chickweed |
| | *SENVU* | Groundsel |

(continued)

| | T1 Pre Emergence | Overall |
| --- | --- | --- |
| | | % Control |
| | *GALAP* | Cleavers |
| Trooper (BASF) contains flufenacet and pendimethalin<br>Firebird (Bayer) contains flufenacet and diflufenican<br>Diflanil contains diflufenican<br>Ethostat contains ethofumesate | | |

At this pre emergence timing, the overall weed control can equal the standard Trooper or even surpass the standard. No adverse crop effects were seen at any assessment timing. This timing has proved very crop safe, even up to eight weeks after application. No crop loss in vigour or establishment was noted.

**Claims**

1.   Use of a composition comprising ethofumesate as a herbicide in the protection of wheat crops, wherein the composition is applied to the wheat crop either pre emergence, or post emergence not before ZCK 13 and wherein the composition is applied to the wheat such that an amount of ethofumesate of between 50 grams active/ha and 600 grams active/ha is applied.

2.   Use according to claim 1, wherein the wheat crop is winter wheat.

3.   Use according to claim 1 or claim 2 wherein the composition is applied to the wheat between ZCK 13 and ZCK 31.

4.   Use according to any preceding claim, wherein the composition further comprises one or more further herbicides selected from phenmedipham, pendimethalin, trifluralin, iodosulfuron, mesosulfuron, isoproturon (IPU.), chlorotoluron (CTU), flufenacet, diflufenican (DFF), flurtamone, picolinofen, tribenuron, fenoxaprop, +/-clodinafop, bromoxynil, ioxynil, flupyrsulfuron-methyl, pinoxaden, proxsulam and mixtures and combinations thereof

5.   Use according to claim 4, wherein the one or more further herbicides are selected from iodosulfuron, mesosulfuron, pendimethalin, picolinofen, flufenacet, and DFF.

6.   Use according to claim 4, wherein when more than one further herbicides are combined with ethofumesate, these further herbicides are selected from mixtures of iodosulfuron with mesosulfuron, flufenacet with diflufenican, flurtamone with diflufenican, pendimethalin with picolinofen, clodinafop with trifluralin, bromoxynil with ioxynil, clodinafop with DFF, clodinafop with pinoxaden, and fenoxaprop with IPU.

7.   Use according to any preceding claim, wherein the composition further comprises one or more adjuvants.

8.   Use according to claim 7, wherein the one or more adjuvants are selected from oil based adjuvants and mixtures, organosilicone based adjuvants and mixtures, non-ionic based adjuvants and mixtures, polymeric based adjuvants and mixtures, and fatty acid based adjuvants and mixtures.

9.   Use according to any preceding claim, wherein the composition is used to control or inhibit the growth of and/or kill weeds.

10.   Use according to claim 9, wherein the weed is blackgrass, annual meadow grass, knotgrass, chickweed, cleavers, redshank, black bindweed and/or voluntary oilseed rape.

**Patentansprüche**

1.   Verwendung einer Zusammensetzung, die Ethofumesat als Herbizid umfasst, zum Schutz von Weizenpflanzen, wobei die Zusammensetzung entweder im Vorauflauf oder im Nachauflauf nicht vor ZCK 13 auf die Weizenpflanzen aufgebracht wird, und wobei die Zusammensetzung auf den Weizen so aufgebracht wird, dass eine Menge an Ethofumesat von 50 Gramm Wirkstoff/ha bis 600 Gramm Wirkstoff/ha aufgebracht wird.

2. Verwendung nach Anspruch 1, wobei die Weizenpflanze Winterweizen ist.

3. Verwendung nach Anspruch 1 oder Anspruch 2, wobei die Zusammensetzung auf den Weizen zwischen ZCK 13 und ZCK 31 aufgebracht wird.

4. Verwendung nach einem der vorhergehenden Ansprüche, wobei die Zusammensetzung ferner ein oder mehrere weitere Herbizide ausgewählt aus Phenmedipham, Pendimethalin, Trifluralin, Iodosulfuron, Mesosulfuron, Isoproturon (IPU), Chlorotoluron (CTU), Flufenacet, Diflufenican (DFF), Flurtamone, Picolinofen, Tribenuron, Fenoxaprop, +/-Clodinafop, Bromoxynil, Ioxynil, Flupyrsulfuron-Methyl, Pinoxaden, Proxsulam und Mischungen und Kombinationen davon umfasst.

5. Verwendung nach Anspruch 4, wobei das eine oder die mehreren weitere(n) Herbizid(e) ausgewählt ist oder sind aus Iodosulfuron, Mesosulfuron, Pendimethalin, Picolinofen, Flufenacet und DFF.

6. Verwendung nach Anspruch 4, wobei, wenn mehr als ein weiteres Herbizid mit Ethofumesat kombiniert wird, diese weiteren Herbizide ausgewählt sind aus Mischungen von Iodosulfuron mit Mesosulfuron, Flufenacet mit Diflufenican, Flurtamone mit Diflufenican, Pendimethalin mit Picolinofen, Clodinafop mit Trifluralin, Bromoxynil mit Ioxynil, Clodinafop mit DFF, Clodinafop mit Pinoxaden, und Fenoxaprop mit IPU.

7. Verwendung nach einem der vorhergehenden Ansprüche, wobei die Zusammensetzung ferner einen oder mehrere Hilfsstoff(e) umfasst.

8. Verwendung nach Anspruch 7, wobei der eine oder die mehreren Hilfsstoffe ausgewählt ist oder sind aus ölbasierten Hilfsstoffen und Mischungen, Organosilikon-basierten Hilfsstoffen und Mischungen, nichtionisch-basierten Hilfsstoffen und Mischungen, polymerbasierten Hilfsstoffen und Mischungen und Fettsäure-basierten Hilfsstoffen und Mischungen.

9. Verwendung nach einem der vorhergehenden Ansprüche, wobei die Zusammensetzung verwendet wird, um das Wachstum von Unkräutern zu kontrollieren oder zu hemmen und/oder Unkräuter abzutöten.

10. Verwendung nach Anspruch 9, wobei das Unkraut Ackerfuchsschwanz, Einjährige Rispe, Knöterich, Sternmiere, Klettenlabkraut, Rotschenkel, Ackerwinde und/oder Ölrapsdurchwuchs ist.

**Revendications**

1. Utilisation d'une composition comprenant de l'éthofumesate en tant qu'herbicide dans la protection de cultures de blés, dans laquelle la composition est appliquée à la culture de blé soit en prélevée, soit en post-levée pas avant le ZCK 13 et dans laquelle la composition est appliquée au blé de sorte qu'une quantité d'éthofumesate comprise entre 50 grammes actifs/ha et 600 grammes actifs/ha est appliquée.

2. Utilisation selon la revendication 1, dans laquelle la culture de blé est du blé d'hiver.

3. Utilisation selon la revendication 1 ou la revendication 2, dans laquelle la composition est appliquée au blé entre le ZCK 13 et le ZCK 31.

4. Utilisation selon l'une quelconque des revendications précédentes, dans laquelle la composition comprend en outre un ou plusieurs herbicides supplémentaires choisis parmi le phenmédiphame, la pendiméthaline, la trifuraline, l'iodosulfuron, le mésosulfuron, l'isoproturon (IPU), le chlorotoluron (CTU), le flufénacet, le diflufenican (DFF), le flurtamone, le picolinafène, le tribénuron, le fénoxaprop, le +/-clodinafop, le bromoxynil, l'ioxynil, le flupyrsulfuron-méthyle, le pinoxaden, le proxsulam et leurs mélanges et combinaisons.

5. Utilisation selon la revendication 4, dans laquelle l'herbicide ou les herbicides supplémentaires sont choisis parmi l'iodosulfuron, le mésosulfuron, la pendiméthaline, le picolinafène, le flufénacet et le DFF.

**6.** Utilisation selon la revendication 4, dans laquelle lorsque plus d'un herbicide supplémentaire sont combinés avec l'éthofumesate, ces herbicides supplémentaires sont choisis parmi des mélanges d'iodosulfuron avec le mésosulfuron, de flufénacet avec le diflufenican, de flurtamone avec le diflufenican, de pendiméthaline avec le picolinafène, de clodinafop avec la trifuraline, de bromoxynil avec l'ioxynil, de clodinafop avec le DFF, de clodinafop avec le pinoxaden et de fénoxaprop avec l'IPU.

**7.** Utilisation selon l'une quelconque des revendications précédentes, dans laquelle la composition comprend en outre un ou plusieurs adjuvants.

**8.** Utilisation selon la revendication 7, dans laquelle l'adjuvant ou les adjuvants sont choisis parmi des adjuvants et mélanges à base d'huile, les adjuvants et mélanges à base d'organosilicone, les adjuvants et mélanges à base non-ionique, des adjuvants et mélanges à base de polymère, et des adjuvants et mélanges à base d'acide gras.

**9.** Utilisation selon l'une quelconque des revendications précédentes, dans laquelle la composition est utilisée pour lutter contre ou inhiber la croissance et/ou tuer des mauvaises herbes.

**10.** Utilisation selon la revendication 9, dans laquelle la mauvaise herbe est l'amytis noir, le pâturin annuel, la renouée, le mouron des oiseaux, le gaillet, la renouée persicaire, le liseron noir et/ou le colza oléagineux volontaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 113169 A